# EUROPÄISCHE PATENTSCHRIFT

(11) **EP 1 039 287 B1**
(45) Veröffentlichungstag und Bekanntmachung des Hinweises auf die Patenterteilung: **04.04.2007**
(21) Anmeldenummer: 00102240.9
(22) Anmeldetag: 14.02.2000
(51) Int. Cl.: G01M 15/00

(54) **Verfahren zur Erkennung von abgasverschlechternden und katalysatorschädigenden Aussetzern bei Verbrennungsmotoren**
Method for detecting of exhaust gas degrading and catalysator destroying misfiring of a combustion engine
Procédé de détection de ratés nuisibles pour le catalysateur et provoquant une degradation des gaz d'échappement dans des moteurs à combustion

(30) Priorität: 26.03.1999 DE 19913746
(43) Veröffentlichungstag der Anmeldung: 27.09.2000
(73) Patentinhaber: Bayerische Motoren Werke Aktiengesellschaft, 80809 München (DE)
(72) Erfinder: Ebeling, Karl-Heinz, 81925 München (DE); Eichlinger, Erich, 85290 Geisenfeld (DE)

(56) Entgegenhaltungen:
- WO-A-92/11522
- DE-A- 4 002 208
- US-A- 5 421 196

## Beschreibung

Die Erfindung betrifft ein Verfahren zur Erkennung von abgasverschlechternden und katalysatorschädigenden Aussetzern bei Verbrennungsmotoren gemäß dem Oberbegriff des Anspruchs 1.

Im Zuge der On-Board-Diagnose wird von Gesetzgebern vermehrt eine Überwachung des Motors auf Verbrennungsaussetzer gefordert. Solche Verfahren sind allgemein bekannt.

Beispielsweise ist in der DE 40 02 208 A1 ein Verfahren zum Erkennen von Verbrennungsaussetzern bei einem Motor beschrieben, bei dem ein Lambda-Signal einer Lambda-Sonde erfaßt wird. Ferner wird die Amplitude desjenigen Signalanteils bestimmt, der die Frequenz der Nockenwelle aufweist. Sodann werden aufeinanderfolgende Amplitudenwerte gemittelt. Übersteigt der gemittelte Amplitudenwert einen Schwellenwert, wo wird auf das Vorliegen von Aussetzern geschlossen.

In der WO 92/11522 ist eine Diagnoseeinrichtung zur Erkennung von Verbrennungsaussetzern in einer Brennkraftmaschine beschrieben. Allgemein wird in dieser Veröffentlichung darauf hingewiesen, daß drei Gruppen von Erkennungsverfahren bekannt sind. Die erste Gruppe betrachtet Prozeßausgangsgrößen, wie Laufunruhe, Geräusche, Vibrationen oder das Lambda-Sonden-Signale. Die zweite Gruppe von Diagnoseverfahren betrachtet Prozeßeingangsgrößen, wie beispielsweise den Zündstrom oder die Ausgangssignale der Endstufen für die Einspritzventile. Die dritte Gruppe schließlich betrachtet den Prozeß selbst durch eine Druckermittlung im Brennraum.

Allerdings gibt es unterschiedliche Arten von Verbrennungsaussetzern. Bei den Verbrennungsaussetzern wird allgemein zwischen abgasverschlechternden und katalysatorschädigenden Aussetzern unterschieden.

Die Überwachung von abgasrelevanten Aussetzern soll bei der Überschreitung eines vorgegebenen Abgasschwellwertes einen Fehler melden. Beispielsweise kann eine Aussetzerrate für vier Intervalle mit je 1.000 Motorumdrehungen ermittelt werden.

Bei noch höheren Aussetzerraten kann es betriebspunktabhängig zu einer Schädigung des Katalysators kommen, wenn dieser von unverbranntem Kraftstoff durchströmt und überhitzt wird. Bei Vorliegen eines solchen Umstandes müssen ein Fehler gemeldet und der oder die betreffenden Zylinder abgeschaltet werden. Je nach Betriebsbereich des Motors findet die Auswertung auf katalysatorschädigende Aussetzer beispielsweise in einem oder mehreren Intervallen zu je 200 Motorumdrehungen statt.

Problematisch bei den obengenannten bekannten Diagnosen von Verbrennungsaussetzern ist die Gleichbehandlung der Aussetzer, egal was sie für Ursachen haben. Es wird also nicht unterschieden, ob die Kraftstoffzufuhr oder aber die Zündung unterbrochen ist oder ob ein anderer Fehler vorliegt. Als Konsequenz wird bei einer Unterbrechung der Kraftstoffzufuhr sicherheitshalber auf einen katalysatorschädigenden Verbrennungsaussetzer geschlossen, obwohl eine Schädigung des Katalysators gar nicht oder erst bei einer viel höheren Aussetzerrate auftritt. Eine Fehlermeldung und eine Zylinderabschaltung erfolgt daher verfrüht und wäre noch nicht notwendig.

Aus der DE 40 19 573 A1 ist ein Verfahren zur Erkennung von Verbrennungsaussetzern und/oder ungleichmäßiger Einspritzung bei Brennkraftmaschinen bekannt, bei dem der Anteil oder Partialdruck des Sauerstoffs im Abgas zur Feststellung der Art des Verbrennungsaussetzers ausgewertet wird.

In der Veröffentlichung "Methods of On-Board Misfire Detection", SAE-Paper 900232, 1990, von G. Plapp, M. Klenk und W. Moser, ist eine Verbrennungsaussetzererkennung entweder über eine Auswertung des Lambda-Sondensignals oder der Laufunruhe des Motors beschrieben. Über eine Auswertung des Lambda-Sondensignals kann man darauf schließen, ob der Verbrennungsaussetzer durch eine defekte Einspritzung oder eine defekte Zündung hervorgerufen ist.

Allerdings sind die vorgenannten Arten der prinzipiellen Erkennung von Verbrennungsunregelmäßigkeiten über eine Analyse des Lambda-Sondensignals relativ träge und zum Teil ungenau.

Aufgabe der vorliegenden Erfindung ist es, ein Verfahren der eingangs genannten Art anzugeben, mit dem Verbrennungsunregelmäßigkeiten genau erkannt und ohne weiteres auf die Aussetzerart geschlossen werden können.

Diese Aufgabe wird durch die im Anspruch 1 genannten Merkmale gelöst.

Demgemäß wird ein Verbrennungsaussetzer prinzipiell über eine Drehzahl- oder Laufunruhe des Motors erkannt. Die Aussetzerart hingegen wird über eine Analyse der Lambda-Sondenspannung ermittelt. Dabei wird die Lambda-Sondenspannung bezogen auf den erkannten Verbrennungsaussetzer ermittelt. In Abhängigkeit von dieser Sondenspannung wird dann auf die Aussetzerart geschlossen.

Zur Erkennung, ob unverbrannter Kraftstoff an den Katalysator gelangt, wird demnach die nach dem Katalysator angeordnete Lambda-Sonde herangezogen. Bei Ausfall der Zündung erkennt die Sonde nach dem Katalysator nämlich ein "fettes Gemischt", was sich in einer Spannung über einem bestimmten Grenzwert zeigt. Bei einem Ausfall der Einspritzung wird der Katalysator nicht mit unverbranntem Kraftstoff beaufschlagt, so daß das Sondensignal ein "mageres Gemisch" anzeigt. In diesem Fall ist die Spannung kleiner als ein vorgegebener Grenzwert.

Insgesamt dient die Sondenspannung somit als Entscheidungskriterium zur Anzeige der Aussetzerart und ist insofern in ein zweistufiges Verfahren eingebettet, bei dem im ersten Schritt die Verbrennungsunregelmäßigkeit über eine Analyse der Drehzahl oder eine sonstige Erfassung der Laufunruhe ermittelt ist.

Gemäß einer vorteilhaften Ausführungsform ist zur Auswertung eine Filterung des Sondensignals denkbar. Alternativ kann das Signal auch in einem Zeitraum, in dem Aussetzer auftreten, gemittelt werden. Dabei können vorzugsweise auch die Gaslaufzeiten und/oder die Zeiten für das Fluten des Katalysators mit Sauerstoff mitberücksichtigt werden.

Bei einer bevorzugten Ausführungsform der Erfindung wird geprüft, ob die Lambdasondenspannung einen ersten Grenzwert übersteigt. In Abhängigkeit von der Lambdasondenspannung wird dann auf eine Aussetzerart infolge einer Fehlzündung, einer Fehleinspritzung oder eines anderen Fehlers geschlossen.

Bei einer alternativen Ausführungsart werden zwei Grenzwerte festgelegt. Befindet sich die Sondenspannung überhalb des oberen Grenzwertes, so wird eine fehlerhafte Zündung angenommen. Befindet sich die Sondenspannung unterhalb des unteren Grenzwertes, so wird eine fehlerhafte Einspritzung angenommen.

Als Lambdasonde kann eine Sprungsonde oder eine Breitbandsonde verwendet werden.

Da eine Abschaltung eines fehlerhaft funktionierenden Zylinders bei einer bestimmten Aussetzerrate von katalysatorschädigenden Aussetzern erfolgt, kann die Abschaltung genau dann durchgeführt werden, wenn der Katalysator tatsächlich geschädigt werden würde. Ein Fehlereintrag auf "katalysatorschädigenden Aussetzer" erfolgt damit erst später, verglichen mit herkömmlichen Diagnosevorgängen. Dies ist gesetzlich zulässig, weil eine Katalysatorschädigung ja tatsächlich bei einem abgasverschlechternden Aussetzer nicht gegeben ist. Insgesamt kann eine Abschaltung eines Zylinders damit hinausgezögert oder unterbunden werden.

Durch eine Abspeicherung der Aussetzer und der Aussetzart in einem Speicher, insbesondere in einem Speicher eines Diagnosegeräts, läßt sich die Fehlersuche in der Werkstatt erheblich vereinfachen.

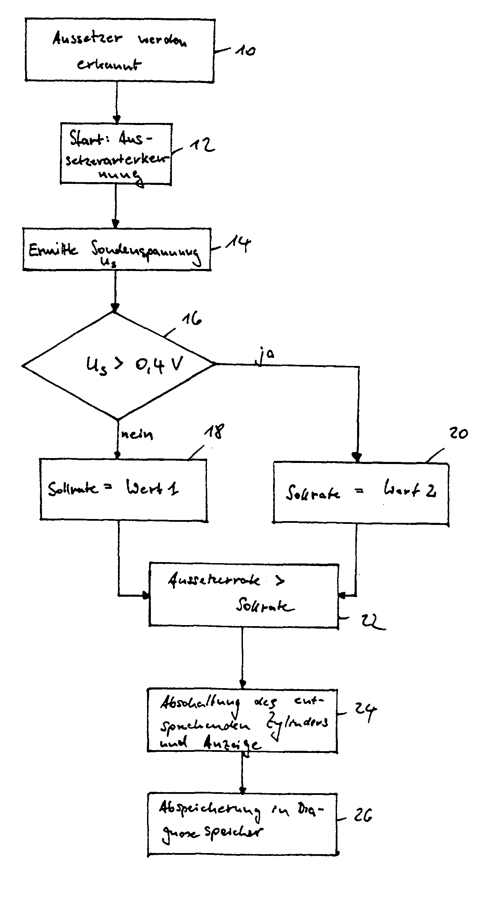

Eine einfache Ausführungsform der Erfindung wird nachfolgend und mit Bezug auf die einzige beiliegende Zeichnung näher erläutert. Die Zeichnung zeigt ein Blockablaufdiagramm für ein erfindungsgemäßes Verfahren.

Gemäß dem Blockablaufdiagramm wird zunächst über eine Auswertung eines (nicht dargestellten) Drehzahlsignals des Motors erkannt, daß überhaupt ein Aussetzer in einem oder mehreren Zylindern vorliegt (Bezugszeichen 10).

Nach dieser prinzipiellen Aussetzererkennung über die Drehzahlanalyse wird die Aussetzarterkennung gestartet (Bezugszeichen 12). In einem nächsten Schrift 14 wird zunächst die Sondenspannung der strömungsabwärts dem Katalysator angeordneten Sonde U_{S} ermittelt.

Im Schrift 16 wird verglichen, ob diese auf die erkannte Zylinderaussetzung bezogene Sondenspannung U_{S} größer ist, als ein vorgegebener Schwellwert. Vorliegend wird ein Schwellwert von 0,4 V verwendet.

Alternativ können auch zwei Schwellwerte verwendet werden. Beispielsweise deutet bei der Lambda-Sonde von Bosch LSH 25 eine Spannung von 0,6 V und größer auf ein fettes Gemisch, eine Spannung von 0,1 V und kleiner auf ein mageres Gemisch hin.

Entsprechend der Überprüfung der Sondenspannung U_{S} wird eine Sollrate auf einen Wert_1 in Schritt 18 (nein) und auf einen Wert_2 in Schritt 20 (ja) gesetzt. Die Sollrate gibt an, wann ein Zylinder, bei dem ein Aussetzen erkannt worden ist, abgeschaltet werden muß.

Um Fehler aufgrund von Spannungssignalschwankungen bei der Lambda-Sonde zu vermeiden kann die Sondenspannung auch über mehrere Arbeitsspiele des Zylinders gemittelt werden.

Im Schrift 22 wird nun die in einem oder in mehreren Zylindern tatsächlich vorliegende Aussetzerrate mit der in den Schriften 18 bzw. 20 definierten Sollrate verglichen.

Ist die Aussetzerrate in Schritt 22 größer als die Sollrate, so erfolgt eine Abschaltung des oder der entsprechenden Zylinder und eine Anzeige für den Fahrer (Bezugsziffer 24). Ferner erfolgt eine Abspeicherung der Aussetzerrate und der Aussetzerart in einem Diagnosespeicher (Bezugsziffer 26). Ist die Aussetzerrate in Schrift 22 kleiner als die Sollrate, so erfolgt keine Abschaltung des Zylinders.

Auf diese Art kann man je nach Aussetzerart (Zündung oder Einspritzung) auf eine andere Grenzaussetzrate umschalten. Bei einem Sondenfehler oder bei einer kalten Sonde wird jedoch immer der kritischere Fall, also ein Zündungsaussetzer, angenommen.

Die Aussetzung hinsichtlich abgasrelevanter Aussetzer bleibt von dieser vorgenannten Auswerteart unberührt. Damit ist die Konformität mit bestehenden Gesetzen sichergestellt. Neben den Fehlerarten "Zündsystem/Verbrennung" bei einer Sondenspannung größer als 0,6 V und Kraftstoffmangel bei einer Sondenspannung U_{S} von kleiner als 0,1 V kann in einem Zwischenbereich auch eine Fehlerart "unplausibel" angegeben werden.

Anstaft von Lambda-Sonden können alternativ auch Temperaturfühler oder NO_{X}-Sensoren zur Detektion verwendet werden.

Insgesamt kann eine Abschaltung eines Zylinders unterbunden werden, wenn diese nicht notwendig ist. Dadurch lassen sich die Gewährleistungskosten senken, da weniger häufig Bauteile getauscht werden müssen.

## Patentansprüche

1. Verfahren zur Erkennung von abgasverschlechternden und katalysatorschädigenden Aussetzern bei Verbrennungsmotoren mit einer nach einem Katalysator angeordneten Lambda-Sonde, bei dem Verbrennungsaussetzer über eine Analyse der Motordrehzahlen oder eine sonstige Erfassung der Laufunruhe des Motors in zumindest einem Zylinder des Verbrennungsmotors erkannt werden,
**dadurch gekennzeichnet,**
**daß** die Lambda-Sondenspannung bezogen auf den erkannten Verbrennungsaussetzer erfaßt und daß in Abhängigkeit von der Sondenspannung auf die Aussetzerart geschlossen wird.

2. Verfahren nach Anspruch 1,
**dadurch gekennzeichnet,**
**daß** geprüft wird, ob die Lambda-Sondenspannung einen ersten Grenzwert übersteigt,
**daß** auf einen Verbrennungsaussetzer aufgrund einer fehlerhaften Zündung geschlossen wird, wenn der erste Grenzwert überschritten ist, und daß
**daß** auf einen Verbrennungsaussetzer aufgrund einer fehlerhaften Einspritzung geschlossen wird, wenn der erste Grenzwert unterschritten ist.

3. Verfahren nach Anspruch 1,
**dadurch gekennzeichnet,**
**daß** geprüft wird, ob die Lambda-Sondenspannung einen ersten Grenzwert übersteigt,
**daß** geprüft wird, ob die Lambda-Sondenspannung einen zweiten Grenzwert unterschreitet,
**daß** auf einen Verbrennungsaussetzer aufgrund einer fehlerhaften Zündung geschlossen wird, wenn der erste Grenzwert überschritten ist,
**daß** auf einen Verbrennungsaussetzer aufgrund einer fehlerhaften Einspritzung geschlossen wird, wenn der zweite Grenzwert unterschritten ist,
und **daß** auf einen Verbrennungsaussetzer aufgrund einer anderen Fehlfunktion geschlossen wird, wenn eine Sondenspannung zwischen dem ersten und dem zweiten Grenzwert vorliegt.

4. Verfahren nach Anspruch 2,
**dadurch gekennzeichnet,**
**daß** als Lambda-Sonde eine Sprungsonde verwendet wird und der erste Grenzwert zwischen 0,1 und 0,6 Volt festgelegt wird.

5. Verfahren nach Anspruch 3.
**dadurch gekennzeichnet,**
**daß** als Lambda-Sonde eine Sprungsonde verwendet wird und der erste Grenzwert zwischen 0.4 und 0.8 Volt und der zweite Grenzwert zwischen 0 und 0,2 Volt festgelegt wird

6. Verfahren nach Anspruch 1 oder 2,
**dadurch gekennzeichnet,**
**daß** als Lambda-Sonde eine Breitbandsonde verwendet wird.

7. Verfahren nach einem der vorhergehenden Ansprüche,
**dadurch gekennzeichnet,**
**daß** eine Grenz-Aussetzerrate, bei der ein Fehler gemeldet und/oder ein oder mehrere Zylinder abgeschaltet werden, in Abhängigkeit von der festgestellten Aussetzart gewählt wird.

8. Verfahren nach einem der vorhergehenden Ansprüche,
**dadurch gekennzeichnet,**
**daß** die Aussetzer und/oder die Aussetzerart in einem Speicher, insbesondere in einem Speicher eines Diagnosegerätes, abgespeichert werden.

9. Verfahren nach einem der vorhergegangenen Ansprüche,
**dadurch gekennzeichnet,**
**daß** das Signal der Lambda-Sonde vor der Auswertung gefiltert wird.

10. Verfahren nach einem der vorhergegangenen Ansprüche,
**dadurch gekennzeichnet,**
**daß** das Signal der Lambda-Sonde in dem Zeitraum, in dem ein Aussetzer aufgetreten ist, gemittelt werden.

11. Verfahren nach einem der vorhergegangenen Ansprüche,
**dadurch gekennzeichnet,**
**daß** die Gaslaufzeit und/oder die Zeit für das Fluten des Katalysators mit Sauerstoff berücksichtigt wird.

## Claims

1. A method of detecting misfires (which degrade the exhaust gas and damage the catalytic converter) in internal combustion engines, using a lambda probe disposed behind a catalytic converter, wherein misfires are detected by analysis of the engine revolution rates or otherwise by detection of unsteady running of the engine in at least one cylinder thereof, **characterised in that** the lambda probe voltage relating to the detected misfire is determined and the nature of the misfire is inferred in dependence on the probe voltage.

2. A method according to claim 1, **characterised in that** a check is made whether the lambda probe voltage exceeds a first limiting value,
a misfire due to faulty ignition is inferred if the value is above the first limit and
a misfire due to faulty injection is inferred if the value is below the first limit.

3. A method according to claim 1, **characterised in that** a check is made whether the lambda probe voltage exceeds a first limiting value,
a check is made whether the lambda probe voltage is below a second limiting value,
a misfire due to faulty ignition is inferred if the value is above the first limit,
a misfire due to faulty ignition is inferred if the value is below the second limit, and
a misfire due to other faulty operation is inferred if a probe voltage is between the first and the second limit.

4. A method according to claim 2, **characterised in that** the lambda probe is a snap-action probe and the first limiting value is fixed between 0.1 and 0.6 V.

5. A method according to claim 3, **characterised in that** the lambda probe is a snap-action probe and the first limiting value is fixed between 0.4 and 0.8 V and the second value between 0 and 0.2 V.

6. A method according to claim 1 or 2, **characterised in that** the lambda probe is a wide-band probe.

7. A method according to any of the preceding claims, **characterised in that** a limiting misfire rate at which a fault is indicated and/or one or more cylinders are switched off, is chosen in dependence on the ascertained nature of the misfire.

8. A method according to any of the preceding claims, **characterised in that** the misfire and/or the nature thereof is stored in a memory, especially in a memory of a diagnostic unit.

9. A method according to any of the preceding claims, **characterised in that** the lambda-probe signal is filtered before evaluation.

10. A method according to any of the preceding claims, **characterised in that** the lambda-probe signal is averaged during the period in which a misfire has occurred.

11. A method according to any of the preceding claims, **characterised in that** the delay in exhaust gas analysis and/or the time for flooding the catalytic converter with oxygen is taken into consideration.

## Revendications

1. Procédé de détection de ratés nuisibles pour le catalyseur et dégradant les gaz d'échappement de moteurs à combustion avec une sonde lambda disposée en aval d'un catalyseur, selon lequel des ratés de combustion sont détectés par une analyse du régime du moteur ou par une autre détermination de l'irrégularité de marche du moteur dans au moins un cylindre du moteur à combustion,
**caractérisé en ce qu'**
on détermine la tension de sonde lambda par rapport au raté de combustion détecté et on identifie le type de raté en fonction de la tension de sonde.

2. Procédé selon la revendication 1,
**caractérisé en ce qu'**
on vérifie si la tension de sonde lambda dépasse une première valeur de seuil,
on constate un raté de combustion en raison d'un allumage défaillant si la première valeur de seuil est dépassée, et
on constate un raté de combustion en raison d'une injection défectueuse si la première valeur de seuil est passée vers le bas.

3. Procédé selon la revendication 1,
**caractérisé en ce qu'**
on vérifie si la tension de sonde lambda dépasse une première valeur de seuil,
on vérifie si la tension de sonde lambda n'atteint pas une deuxième valeur de seuil,
on constate un raté de combustion en raison d'un allumage défaillant si la première valeur de seuil est dépassée,
on constate un raté de combustion en raison d'une injection défectueuse si la deuxième valeur de seuil est passée vers le bas, et
on constate un raté de combustion en raison d'une autre fonction défaillante si la tension de sonde se situe entre la première et la deuxième valeurs de seuil.

4. Procédé selon la revendication 2,
**caractérisé en ce que**
la sonde lambda est une sonde à ressort et on fixe la première valeur de seuil entre 0,1 et 0,6 Volts.

5. Procédé selon la revendication 3,
**caractérisé en ce que**
la sonde lambda est une sonde à ressort et on fixe la première valeur de seuil entre 0,4 et 0,8 Volts et la deuxième valeur de seuil entre 0 et 0,2 Volts.

6. Procédé selon la revendication 1 ou 2,
**caractérisé en ce que**
la sonde lambda est une sonde à bande large.

7. Procédé selon l'une quelconque des revendications précédentes,
**caractérisé en ce qu'**
on choisit un taux de ratés limite, à partir duquel un défaut est signalé et/ou un ou plusieurs cylindres sont désactivés, en fonction du type de ratés identifié.

8. Procédé selon l'une quelconque des revendications précédentes,
**caractérisé en ce qu'**
on enregistre les ratés et/ou le type de ratés dans une mémoire, en particulier une mémoire d'un appareil de diagnostic.

9. Procédé selon l'une quelconque des revendications précédentes,
**caractérisé en ce qu'**
on filtre le signal de la sonde lambda avant l'exploitation.

10. Procédé selon l'une quelconque des revendications précédentes,
**caractérisé en ce qu'**
on pondère le signal de la sonde lambda pendant l'intervalle de temps au cours duquel un raté s'est produit.

11. Procédé selon l'une quelconque des revendications précédentes,
**caractérisé en ce qu'**
on tient compte du temps d'écoulement de gaz et/ou du temps d'alimentation du catalyseur en oxygène.
